# EUROPÄISCHE PATENTSCHRIFT

(11) **EP 0 747 303 B1**
(45) Veröffentlichungstag und Bekanntmachung des Hinweises auf die Patenterteilung: **26.08.1998**
(21) Anmeldenummer: 96107707.0
(22) Anmeldetag: 14.05.1996
(51) Int. Cl.: B65G 15/52, A01D 17/10

(54) **Stabband für Stabbandförderer**
Rod belt for rod belt conveyors
Courroie à barreaux pour transporteurs à barraux

(30) Priorität: 08.06.1995 DE 19520927
(43) Veröffentlichungstag der Anmeldung: 11.12.1996
(73) Patentinhaber: GUMMI-JÄGER KG GMBH & CIE, D-30625 Hannover (DE)
(72) Erfinder: Röhrs, Friederich, 29227 Celle (DE)
(74) Vertreter: Depmeyer, Lothar

(56) Entgegenhaltungen:
- DE-A- 3 246 528

## Beschreibung

Die Erfindung betrifft ein Stabband für Stabbandförderer, insb. Siebstabband für landwirtschaftliche Maschinen, wobei die Stäbe quer zur Laufrichtung des Stabbandförderes angeordnet und mit ihren abgeflachten Enden auf umlaufenden, zugfesten, biegsamen Gurten aufliegen und dort mittels Schrauben, Miete od. dgl. befestigt sind, die die Enden und die Gurte durchsetzen (siehe zum Beispiel das Dokument DE-A-3 246 528).

Bei den bekannten Stabbändern dieser Art sind die Enden der Stäbe so abgeflacht und gestaltet, dass ihre in Laufrichtung des Förderers vorne und hinten liegenden Ränder quer zu den Gurten und gerade verlaufen. Die zur Befestigung der Niete und Schrauben erforderlichen Löcher in den erwähnten Enden führen zwangsläufig zu einer Schwächung der aktiven Querschnitte der Stabenden; ausserdem ist die Auflage dieser Enden auf den Gurten ungünstig, weil die gerade verlaufenden Seitenränder der Enden zu Kerbungen in den Gurten führen können.

Der Erfindung liegt die Aufgabe zugrunde, die eingangs erwähnten Stabbänder so zu verbessern, dass die Befestigungslöcher nicht mehr zu unerwünschten Schwächungen führen und zudem die vorgenannten Kerbwirkungen der Seitenränder nicht mehr auftreten können.

Zur Lösung dieser Aufgabe sind erfindungsgemäss die Ränder der Enden im Bereich der Befestigungselemente ( Schrauben, Miete und dgl. ) mit Auswölbungen versehen. Demgemäss verlaufen die Ränder bzw. die von ihnen gebildeten Kanten nicht mehr gerade, sondern zumindest auf einem Teil ihrer Länge bogenförmig. Dadurch wird die Auflage der Enden auf den Gurten wesentlich verbessert; die Flächenpressung verringert sich, und zudem ist die Gefahr von Kerbeinschnitten deutlich vermindert. Besonders zweckmässig ist es dabei, wenn die Querschnitte der Enden im Bereich der Befestigungselemente einerseits und diejenigen im Bereich zwischen den oder neben den Auswölbungen andererseits zumindest im wesentlichen übereinstimmen. Dabei ist es aber auch nicht ausgeschlossen, die Enden insgesamt so zu gestalten, dass ihre Querschnitte zu den Bandrändern hin abnehmen. Auch in diesem Falle sind die Auswölbungen so zu bemessen, dass keine Sprünge in den verschiedenen Querschnittsbereichen der Enden eintreten.

Weitere Einzelheiten der Erfindung werden anhand der Zeichnung dargestellt, in der Ausführungsbeispiele der Erfindung dargestellt sind. Es zeigen :
Fig. 1 eine Teildraufsicht auf ein Siebstabband für eine landwirtschaftliche Maschine,
Fig. 2 eine Draufsicht auf eine Befestigungsstelle eines Stabes auf einem Gurt in vergrösserter Darstellung,
Fig. 3 die Befestigungsstelle gemäss Fig. 2 in Gurtlängsrichtung bzw. nach einem Schnitt nach der Linie III - III von Fig. 1 und
Fig. 4 ein abweichend gestaltetes Stabende in der Draufsicht.

Das sich in Richtung des Pfeiles 1 bewegende, endlose, auf Antriebs- und Umlenkrollen geführte Siebstabband weist zwei endlose bzw. endlos gemachte, zugfeste, z.B. aus gummiertem Gewebe bestehende Gurte 2 an seinen Rändern auf. Diese Gurte dienen zur Halterung von quer zu den Gurten verlaufenden, aus Stahl od. dgl. bestehenden Stäben 3, die mit gegenseitigem Abstand angeordnet sind und durch ihren Abstand den Grad der Siebung bestimmen.

Die Stäbe 3 haben abgeflachte Enden 4, mit denen sie auf den Gurten 2 aufliegen. Die Befestigung der Stäbe 3 erfolgt mittels Niete 5, von denen für jedes Ende 4 zwei vorgesehen sind.

Die Enden 4 haben keine gerade verlaufenden Ränder 6 - durch gestrichelte Linien 7 angedeutet - sondern Auswölbungen 8, also kuppenförmige Vorsprünge gegenüber dem Verlauf nach den Linien 7. Demgemäss ergibt sich insg. gesehen ein im wesentlichen wellenförmiger Verlauf der Ränder 6, deren Formgebung jedoch von dem Grad der Auswölbung abhängig ist. Diese Gestaltung hat den grossen Vorteil, dass die sich ggfs. in die Gurte 2 eindrückende Kante der Ränder 6 vergleichsweise grösser ist als eine gerade verlaufende Kante, um so die spez. Pressung zu verringern.

Die Niete 5 durchsetzen die Enden 4, die Gurte 2 und einen unter den Gurten 2 befindlichen Metallstreifen 9. Dazu erhalten die Enden 4 Nietlöcher 10.

Wichtig ist, dass sich Auswölbungen 8 im Bereich oder auch im Bereich der Nietlöcher 10 befinden. Dadurch erfahren die Enden 4 dort keine Schwächung, vielmehr ist es jetzt möglich, den Querschnitt der Enden 4 im Gefahrenbereich der Nietlöcher 10 so zu vergrössern, dass die Festigkeit erhalten bleibt.

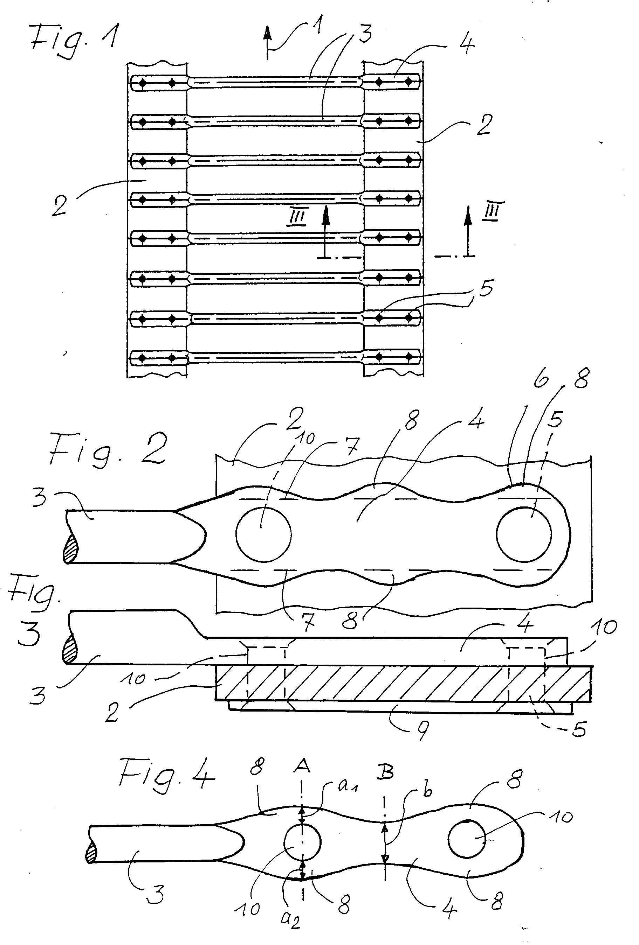

Bei der Ausführung gemäss Fig. 4 ist ebenfalls jedem Nietloch 10 eine Auswölbung 8 zugeordnet, jedoch ist der Bereich zwischen den beiden Nietlöchern 10 eingeschnürt, so dass sich für die Enden 4 ein im wesentlichen katzenzungenförmiger Grundriss ergibt.

Es sei erwähnt, dass die Auswölbungen 8 so gestaltet sind, dass sich für die Enden 4 in den Schnittbereichen A und B je insgesamt Querschnitte ergeben, die zumindest etwa 70 - 90 % gegenüber den Querschnitten bei B betragen. Der Querschnitt an der engsten Stelle bei B entspricht also zumindest im wesentlichen den Querschnitten im Bereich A.

Sollte sich der Querschnitt der Enden 4 zu derem freien Teil hin jedoch verringern, so verringert sich zweckmässigerweise auch der Querschnitt B gegenüber dem Querschnitt bei A. Der Querschnitt im Bereich des aussen gelegenen Nietloches 10 ist demgemäss kleiner als der Querschnitt bei B, der seinerseits kleiner ist als der Querschnitt bei A. Diese Querschnittsveränderung lässt sich dadurch erreichen, dass die Wandstärke der Enden 4 sich allmählich zum freien Teil hin verringert. Auch ist es angebracht, die Nietlöcher 10 nicht zu bohren, sondern ohne Materialwegnahme durch Eintreiben eines Dornes od. dgl. zu erzeugen. Wie im übrigen auch aus der Zeichnung ersichtlich ist, entspricht die Summe a1 plus a2 dem Wert b.

## Patentansprüche

1. Stabband für Stabbandförderer. insb. Siebstabband für landwirtschaftliche Maschinen, wobei die Stäbe (3) quer zur Laufrichtung des Stabbandförderers angeordnet und mit ihren abgeflachten, gelochten Enden (4) auf umlaufenden, zugfesten, biegsamen Gurten (2) aufliegen und dort durch Schrauben, Niete od. dgl. befestigt sind, die die Enden (4) und auch die Gurte (2) durchsetzen, dadurch gekennzeichnet, dass die in Bewegungsrichtung des Stabbandes vorne und hinten gelegenen Ränder (6) der Enden (4) im Bereich der zur Aufnahme der Befestigungsmittel ( Schrauben, Niete und dgl. ) dienenden Löcher (10) kuppenartige Auswölbungen (8) aufweisen.

2. Band nach Anspruch 1, dadurch gekennzeichnet, dass die Enden (4) auch in einem oder mehreren Bereichen, in denen sich keine Löcher (10) befinden, mit Auswölbungen versehen sind.

3. Band nach Anspruch 1 oder 2, dadurch gekennzeichnet, dass die Ränder (6) der Enden (4) im wesentlichen wellenförmig verlaufen.

4. Band nach Anspruch 1, dadurch gekennzeichnet, dass die Enden (4) im Bereich der Löcher (10) eine Gesamtbreite (a1+a2) haben, die zumindest in etwa der Breite (b) solcher Bereiche entspricht, die keine Löcher (1o) aufweisen, und zwar an der Stelle mit der geringsten Breite ( Fig. 4 ).

5. Band nach Anspruch 1 , dadurch gekennzeichnet, dass die Wandstärke der Enden (6) zu derem freien Teil hin abnimmt.

6. Band nach Anspruch 1, dadurch gekennzeichnet, dass die Enden (4) bei zwei Löchern (10) einen Grundriss im wesentlichen nach Art von Katzenzungen aufweisen.

7. Band nach Anspruch 1 und 2, dadurch gekennzeichnet, dass die Enden (4) bei zwei Löchern (10) zwischen ihnen zugeordneten Auswölbungen (8) auf jeder Seite lediglich eine weitere Auswölbung (8) aufweisen ( Fig. 2 ).

8. Band nach Anspruch 4, dadurch gekennzeichnet, dass die Breite im Bereich der Löcher (10) im Vergleich zu den anderen Bereichen ( bei B ) etwa 70 - 90 % ausmacht.

9. Band nach Anspruch 4 und/oder 8, dadurch gekennzeichnet, dass sich die angeführten Breitenrelationen auch auf die Querschnitte beziehen.

## Claims

1. Rod belt for rod belt conveyors, more esp. a sieve-type rod belt for agricultural machines, the rode (3) being disposed transversely relative to the direction of travel of the rod belt conveyor and lying with their flattened, apertured ends (4) on circulatory, substantially inextensible, flexible belts (2), said rods being secured there by means of screws, rivets or the like, which extend through the ends (4) and also through the belts (2), characterised in that the front and rear edges (6) of the ends (4), when viewed with respect to the direction of movement of the rod belt, have rounded bulges (8) in the region of the apertures (10), which serve to accommodate the securing means (screws, rivets and the like).

2. Belt according to claim 1, characterised in that the ends (4) are also provided with bulges in one region or in a plurality of regions where there are no apertures (10).

3. Belt according to claim 1 or 2, characterised in that the edges (6) of the ends (4) extend in a substantially undulatory manner.

4. Belt according to claim 1, characterised in that the ends (4) in the region of the apertures (10) have a total width (a1+a2) which corresponds at least substantially to the width (b) of the regions which have no apertures, that is to say at the location having the smallest width (Fig. 4).

5. Belt according to claim 1, characterised in that the wall thickness of the ends (6) decreases towards their free portion.

6. Belt according to claim 1, characterised in that, when there are two apertures (10), the ends (4) have a configuration substantially in the form of "langues de chat" (cat's tongues).

7. Belt according to claims 1 and 2, characterised in that, when there are two apertures (10) between bulges (8) associated therewith, the ends (4) have on each side only one additional bulge (8) (Fig. 2).

8. Belt according to claim 4, characterised in that the width totals substantially between 70 and 90 % in the region of the apertures (10) compared with the other regions (at B).

9. Belt according to claim 4 and/or 8, characterised in that the above-mentioned width ratios also relate to the cross-sections.

## Revendications

1. Courroie à barreaux pour transporteurs à barreaux, notamment courroie à barreaux de tamisage pour machines agricoles, les barreaux (3) étant disposés transversalement à la direction de déplacement du transporteur à barreaux et reposant, par leurs extrémités (4) aplaties et trouées, sur des bandes (2) circulantes, souples et résistantes à la traction, en y étant fixés par des vis, rivets ou analogues qui traversent les extrémités (4) ainsi que les bandes (2), **caractérisée** en ce que les bords (6) des extrémités (4) situés à l'avant et à l'arrière dans la direction de déplacement de la courroie à barreaux présentent des bombements (8) du genre calottes dans la région des trous (10) servant à recevoir les moyens de fixation (vis, rivets et analogues).

2. Courroie selon la revendication 1, **caractérisée** en ce que les extrémités (4) sont également pourvues de bombements dans une ou plusieurs régions dépourvues de trous (10).

3. Courroie selon la revendication 1 ou 2, **caractérisée** en ce que les bords (6) des extrémités (4) s'étendent de façon essentiellement ondulée.

4. Courroie selon la revendication 1, **caractérisée** en ce que les extrémités (4) possèdent, dans la région des trous (10), une largeur totale (a1 + a2) qui est au moins approximativement égale à la largeur (b) des régions dépourvues de trous (10), et ce en leur endroit de plus faible largeur (figure 4).

5. Courroie selon la revendication 1, **caractérisée** en ce que l'épaisseur de paroi des extrémités (4) diminue en direction de leur partie libre.

6. Courroie selon la revendication 1, **caractérisée** en ce que les extrémités (4) présentent, en présence de deux trous (10), une configuration en projection horizontale essentiellement en forme de langue de chat.

7. Courroie selon la revendication 1 ou 2, **caractérisée** en ce que, les extrémités (4), en présence de deux trous (10), présentent de chaque côté un seul bombement supplémentaire (8) entre les bombements (8) associés aux trous (figure 2).

8. Courroie selon la revendication 4, **caractérisée** en ce que la largeur dans la région des trous (10) représente environ 70 à 90 % de la largeur dans les autres régions (en B).

9. Courroie selon la revendication 4 et/ou 8, **caractérisée** en ce que les relations de largeur indiquées s'appliquent également aux sections transversales.
